# EUROPÄISCHE PATENTSCHRIFT

(11) **EP 4 265 323 B1**
(45) Veröffentlichungstag und Bekanntmachung des Hinweises auf die Patenterteilung: **16.09.2026**
(21) Anmeldenummer: 23164164.8
(22) Anmeldetag: 24.03.2023
(51) Int. Cl.: F17C 7/02, G01G 17/04, G05D 7/06, B01F 23/2361, B01F 35/22, B01F 35/221, B01F 35/21

(54) **SPRUDELVORRICHTUNG UND VERFAHREN ZUM BEGASEN VON FLÜSSIGKEIT**
AN EFFERVESCENT DEVICE AND A METHOD OF GASSING LIQUID
APPAREIL À BULLES ET PROCÉDÉ POUR GAZÉIFIER UN LIQUIDE

(30) Priorität: 28.03.2022 DE 102022107275
(43) Veröffentlichungstag der Anmeldung: 25.10.2023
(73) Patentinhaber: Aquis Systems AG, 9445 Rebstein (CH)
(72) Erfinder: Gröning, Ingolf, 97980 Bad Mergentheim (DE)
(74) Vertreter: Zimmermann & Partner Patentanwälte mbB

(56) Entgegenhaltungen:
- EP-A1- 3 062 050
- EP-B1- 3 180 577
- WO-A1-2019/165497
- US-A1- 2017 246 597

## Beschreibung

### Technisches Gebiet

Die Erfindung betrifft eine Sprudelvorrichtung zum Begasen von Flüssigkeit und ein Verfahren zum Begasen von Flüssigkeit.

### Stand der Technik

Aus dem Stand der Technik sind Sprudler bekannt, welche im Heimgebrauch dazu eingesetzt werden, Wasser mit Kohlendioxid bzw. Kohlensäure zu begasen, um Sprudelwasser, also mit Kohlensäure versetztes Wasser, herzustellen.

Aus der DE 10 2020 215 036 A1 ist ein so genannter vollautomatischer Sprudler bekannt, welcher mittels verschiedener Sensoren oder Messeinrichtungen einen definierten Sprudelgrad erzeugen soll. Unter einer automatisierten Einstellung eines voreinstellbaren Sprudelgrades wird verstanden, dass der Vollautomat einen voreingestellten Sprudelgrad, welcher auch ein vom Benutzer ausgewählter Sprudelgrad sein kann, automatisch in dem Trinkwasser des Wasserbehälters herstellt.

Die US 2017/246597 A1 beschreibt eine Sprudelvorrichtung mit einer türpositionabhängigen Steuerung des Sprudelvorgangs. Die EP 3 062 050 A1 beschreibt eine Sprudelvorrichtung für einen Kühlschrank. Die WO 2019/165497 A1 beschreibt ein Messsystem zur Bestimmung eines Füllstandes einer Gasflasche. US 2017/246597 A1 und WO2019/165497 A1 offenbaren Sprudelvorrichtungen und Verfahren gemäß dem Oberbegriff der beigefügten Ansprüche 1 und 10.

Allerdings besteht ein Bedarf, einen voreinstellbaren Sprudelgrad mit vereinfachten technischen Mitteln oder unter Verwendung von weniger Sensoren bereitzustellen.

### Offenbarung der Erfindung

Aufgabe der Erfindung ist es, die Probleme aus dem Stand der Technik, zumindest teilweise, zu lösen. Insbesondere ist es Aufgabe der Erfindung, eine verbesserte Sprudelvorrichtung und ein Verfahren anzugeben, mit denen insbesondere ein voreinstellbarer Sprudelgrad mit vereinfachten technischen Mitteln oder unter Verwendung weniger Sensoren herstellbar ist.

Die Aufgabe wird mit einer Sprudelvorrichtung nach dem Anspruch 1 und einem Verfahren nach dem nebengeordneten Anspruch gelöst. Vorteilhafte Weiterbildungen und Ausführungsformen ergeben sich aus den Unteransprüchen und aus dieser Beschreibung.

Ein Aspekt der vorliegenden Offenbarung betrifft eine Sprudelvorrichtung, insbesondere zum Begasen von Flüssigkeit mit Kohlendioxid, umfassend: einen Gasauslass, welcher eingerichtet ist, um in einen mit Flüssigkeit befüllbaren Behälter eingeführt zu werden, einen mit dem Gasauslass über ein steuerbares Ventil in Fluidverbindung stehendem Gasanschluss, einer zur Steuerung des Ventils eingerichteten Steuerungseinrichtung, eine Aufnahme mit einer Gewichtsermittlungseinrichtung zur Ermittlung eines Gewichts einer in die Aufnahme aufgenommenen und an den Gasanschluss angeschlossenen Gasflasche, wobei die Sprudelvorrichtung dadurch gekennzeichnet ist, dass die Steuerungseinrichtung das Ventil in Abhängigkeit des ermittelten Gewichts der Gasflasche betätigt.

Ein weiterer Aspekt der vorliegenden Offenbarung betrifft ein Verfahren zum Begasen von Flüssigkeit unter Verwendung einer typischen, wie hierin beschriebenen, Sprudelvorrichtung, umfassend die Schritte: Einführen des Gasauslasses in einen zumindest teilweise mit einer Flüssigkeit befüllten Behälter; Ermittlung eines Gewichts einer in die Aufnahme aufgenommenen und an den Gasanschluss angeschlossenen Gasflasche; und Betätigen des Ventils, welches in einer Fluidverbindung von dem Gasanschluss zu dem Gasauslass angeordnet ist, in Abhängigkeit des ermittelten Gewichts der Gasflasche durch die Steuerungseinrichtung.

Unter dem Begriff "Gasflasche" wird hierin bevorzugt jeder zur Aufnahme von CO₂ geeignete Behälter verstanden, beispielsweise auch Behälter, welche nicht in klassischen Flaschenform ausgebildet sind, oder auch Behälter, welche mehr als 0.25 Liter oder mehr als 1,0 Liter Gas aufnehmen können.

Typischerweise umfasst die Aufnahme eine Halterung für die Gasflasche. Die Aufnahme umfasst bei bevorzugten Ausführungsformen eine Gewichtsermittlungseinrichtung in Form eines Kraftaufnehmers oder einer Waage, mit welcher das Gewicht der Gasflasche ermittelbar ist. Vorzugsweise ist die Aufnahme derart angeordnet, beispielsweise in einem Gehäuse oder einem Raum für die Gasflasche, so dass die Gasflasche nach dem Einsetzen in die Aufnahme frei an der Aufnahme hängt. Bei Ausführungsformen weist die Aufnahme eine Halterung auf, welche die Gasflasche an einem Hals umklammert oder welche die Gasflasche an einer dafür vorgesehenen Halterung, beispielsweise einer Öse oder einer Schiene, hält. In verschiedenen Ausführungsformen ist die Aufnahme vorteilhaft schwenkbar ausgeführt, um einen einfachen Tausch der Gasflasche zu ermöglichen.

Bei typischen Ausführungsformen ist die Steuerungseinrichtung dazu eingerichtet, aus dem Gewicht der Gasflasche einen Füllgrad der Gasflasche zu berechnen. Insbesondere ist die Steuerungseinrichtung dazu eingerichtet, aus dem Gewicht der Gasflasche einen Volumenstrom von Gas zu ermitteln, der bei einer Öffnung des Ventils durch das Ventil strömt. Hierzu kann in der Steuerungseinrichtung beispielsweise eine Look-up-Tabelle abgespeichert sein. Weiterhin kann die Steuerungseinrichtung bei bevorzugten Ausführungsformen dazu eingerichtet sein, an Hand einer an der Gasflasche angeordneten optischen Kennung oder an Hand einer an der Gasflasche angeordneten Nahfeld-Kommunikations-Kennung, wie beispielsweise einem RFID-Chip, einen Typ der Gasflasche zu erkennen und an Hand einer Look-up-Tabelle aus dem Gewicht der Gasflasche einen Füllungsgrad der Gasflasche zu ermitteln.

Gemäß der Erfindung betätigt die Steuerungseinrichtung das Ventil in Abhängigkeit des ermittelten Gewichts der Gasflasche. Dies bietet den Vorteil, dass beispielsweise bei einem geringeren Gewicht der Gasflasche auf einen geringeren Füllstand der Gasflasche geschlossen werden kann. Bei geringerem Füllstand wird das Ventil kürzer geöffnet als bei hohem Füllstand, um einen vorgegebenen Sprudelgrad zu erreichen.

Bei typischen Ausführungsformen betätigt die Steuerungseinrichtung das Ventil in Abhängigkeit eines von einem Benutzer einstellbaren Sprudelgrads. Bei typischen Verfahren empfängt die Steuerungseinrichtung eine Eingabe eines Sprudelgrads, bspw. von einem Benutzer und betätigt des Ventils auch in Abhängigkeit des von dem Benutzer eingestellten Sprudelgrads. Bei typischen Ausführungsformen wird das Ventil in Abhängigkeit des ermittelten Gewichts und der Eingabe des Sprudelgrads geöffnet, wobei die Abhängigkeit insbesondere die Dauer der Öffnung des Ventils beeinflusst. Bei Ventilen mit steuerbarer Öffnungsweite kann auch ein Öffnungsgrad des Ventils beeinflusst werden.

Bei typischen Sprudelvorrichtungen ist die Steuerungseinrichtung dazu eingerichtet, ein Behältervolumen eines an den Gasauslass angeschlossenen Behälters oder ein Flüssigkeitsvolumen einer in dem Behälter aufgenommenen Flüssigkeit zu erfassen und das Ventil in Abhängigkeit des erfassten Behältervolumens oder des erfassten Flüssigkeitsvolumens zu betätigen. Typische Verfahren von Ausführungsformen erfassen ein Behältervolumen eines an den Gasauslass angeschlossenen Behälters oder ein Flüssigkeitsvolumen, und betätigen das Ventil auch in Abhängigkeit des erfassten Behältervolumens oder des erfassten Flüssigkeitsvolumens. Insbesondere werden bei typischen Ausführungsformen Behältervolumen und Flüssigkeitsvolumen erfasst und das Ventil in Abhängigkeit beider Volumina betätigt. Bei typischen Ausführungsformen kann auch ein Füllgrad des Behälters aus den Größen Behältervolumen und Flüssigkeitsvolumen abgeleitet werden und eine Betätigung des Ventils in Abhängigkeit vom Füllgrad erfolgen. Weitere Ausführungsformen gehen von einem vorgegebenen Füllgrad oder einem vorgegebenem Flüssigkeitsvolumen für bestimmte Behälter aus. Eine weitere Möglichkeit ist, ein Flüssigkeitsvolumen aus dem Behältervolumen abzuschätzen, beispielsweise mittels einer vorgegebenen Prozentzahl, welche das Verhältnis des Flüssigkeitsvolumens zum Behältervolumen bezeichnet. Typischerweise ist bei Ausführungsformen das Behältervolumen des Behälters oder des Flüssigkeitsvolumens einer Flüssigkeit im Behälter durch Eingabe an einem Bedienelement der Steuerungseinrichtung für die Steuerungseinrichtung erfassbar. Die Eingabe am Bedienelement kann haptisch, beispielsweise an einem Griff, an einer Drehhülse oder an einem Knopf, oder akustisch erfolgen, beispielsweise mit Hilfe eines Spracheingabecomputers, welcher mit dem Bedienelement beispielsweise über das Internet verbunden ist. Eine weitere Eingabemöglichkeit von Ausführungsformen ist eine optische Erfassung, beispielsweise einer Geste eines Benutzers.

Bei typischen Ausführungsformen umfasst die Steuerungseinrichtung einen Sensor zum Erfassen des Behältervolumens des Behälters und/oder des Flüssigkeitsvolumens einer Flüssigkeit im Behälter. Der mindestens eine Sensor kann einen optischen Sensor umfassen, welcher den Behälter optisch an seiner Gestalt oder an einer Codierung, beispielsweise ein Strich- oder QR-Code an dem Behälter, erkennt. Weiterhin kann ein elektromagnetischer Nahfeldsensor wie beispielsweise ein RFID-Sensor vorhanden sein, welcher mit einem an oder in dem Behälter angeordneten RFID-Chip kommunizieren kann. Das Flüssigkeitsvolumen der Flüssigkeit in dem Behälter kann beispielsweise mit einem optischen Sensor erfasst werden, beispielsweis einem Laser, oder einem Ultraschallsensor, welcher eine Laufzeit von Schall zur Flüssigkeitsoberfläche misst, um das Flüssigkeitsvolumen zu erfassen.

Bei typischen Ausführungsformen ist die Steuerungseinrichtung dazu eingerichtet, einen in Abhängigkeit des Gewichts der Gasflasche ermittelten Füllstandswert für den Füllstand der Gasflasche anzugeben. Hierzu kann bei typischen Verfahren der Erfindung ein Ermitteln eines Füllstandswerts in Abhängigkeit des Gewichts der Gasflasche und ein Ausgeben des Füllstandswerts beispielsweise über ein Display oder über eine Farbanzeige, erfolgen. Der Füllstandswert kann bei Ausführungsformen in eine abgeschätzte verbleibende Anzahl an Sprudelvorgängen umgerechnet werden, welche an einen Benutzer ausgebbar sind. Typische Ausführungsformen können sich dadurch auszeichnen, dass der Füllstandswert oder die verbleibende Anzahl an Sprudelvorgängen an einen Server oder an ein mobiles Gerät übermittelt werden.

Bei Ausführungsformen von Verfahren und Steuerungseinrichtungen kann vorgesehen sein, dass eine Bedienhäufigkeit ermittelt wird und in Abhängigkeit einer Bedienhäufigkeit, dem durchschnittlichen CO₂-Verbrauch bei einem Sprudelvorgang und dem Füllstandswert oder dem Gewicht der Gasfalsche eine Meldung mit einem Kaufhinweis an einen Benutzer ausgegeben oder automatisiert eine Nachbestellung ausgelöst wird. Wenn beispielsweise feststellt wird, dass die Sprudelvorrichtung durchschnittlich X mal am Tag oder maximal Y mal am Tag benutzt wird, wird die Meldung zum Kauf oder zur Bestellung einer neuen Gasflasche ausgelöst, so dass zumindest 5 mal X oder 5 mal Y durchschnittliche Sprudelvorgänge noch möglich sind. In diesem Beispiel würde eine Nachbestellung oder ein Kauf 5 Tage vor einer erwarteten Erschöpfung des CO₂-Reservoirs der Gasflasche ausgelöst. Insbesondere für Abonnements oder Serviceverträge stellt dies eine vorteilhafte Funktion dar, beispielsweise um zu ermöglichen, dass ein Haustürservice rechtzeitig eine neue Gasflasche liefert.

Bei typischen Ausführungsformen von Sprudelvorrichtungen variiert die Steuerungseinrichtung die Öffnungszeit des Ventils in Abhängigkeit eines Parameters. Mögliche Parameter im Rahmen der Erfindung sind insbesondere das ermittelte Gewicht der Gasflasche, der einstellbare Sprudelgrad, das Behältervolumen des Behälters oder das Flüssigkeitsvolumen einer Flüssigkeit im Behälter. Umfasst von der vorhergehenden Parameter-Aufzählung ist auch wie ansonsten üblich bei fehlender anderweitiger Angabe eine Kombination der genannten Parameter oder aus den Parametern abgeleitete Parameter wie beispielsweise eine verbleibende Anzahl von Sprudelvorgängen oder eine verbleibende CO₂-Menge, welche jeweils aus dem Gewicht der Gasflasche abgeleitet sind.

Typischerweise ist die Sprudelvorrichtung als Bestandteil eines konditionierbaren Wassersystems ausgeführt. Ein konditionierbares Wassersystem weist typischerweise eine Steuervorrichtung und kann ein Codierelement aufweisen, wobei die Steuervorrichtung Steuerdaten zu einem Code des Codierelements abspeichern kann. Typische konditionierbare Wassersysteme können zumindest eines oder mehrere der folgenden Komponenten umfassen: Filter, Kühler, Sprudelvorrichtung in einer der hierin beschriebenen typischen Ausführungsformen, Boiler und Mischer zum Mischen verschiedener Wässer. Ein Beispiel für die Funktion eines Mischers kann ein Bereitstellen von Wasser mit einer bestimmten Temperatur unter Mischung von heißem mit kaltem Wasser sein.

Bei typischen Ausführungsformen umfassen die Steuerdaten Information zu zumindest einer der folgenden Konditionierungen des abgegebenen Wassers: Versetzung mit Kohlensäure, Menge oder Temperatur. So kann beispielsweise eine Information zu einer Soll-Temperatur des Wassers in °C oder °F von den Steuerdaten umfasst sein. Typische Temperaturen können von beispielsweise knapp über 0°C, beispielsweise 4°C, bis kochend bzw. im Wesentlichen 100°C umfassen. Weiterhin kann eine Information zu einer Versetzung mit Kohlensäure in den Steuerdaten umfasst sein, beispielsweise ein Soll-Sprudelgrad des abzugebenden Wassers.

Typischerweise ist die Steuerungseinrichtung mit einer digitalen Netzwerkschnittstelle verbunden, beispielsweise einer USB-, einer Bluetooth-, einer LAN- oder einer WLAN-Schnittstelle. Typische Steuerungseinrichtungen sind dazu eingerichtet, Informationen wie beispielsweise die hierin genannten Parameter über die digitale Schnittstelle bereit zu stellen. Bevorzugte Ausführungsformen stellen ein Zugriff über einen mit der digitalen Schnittstelle verbundenen Server auf die Steuerungseinrichtung bereit. So ist es möglich, auf die Steuerungseinrichtung beispielsweise mit einem insbesondere mobilen Endgerät zuzugreifen. Hierdurch kann eine Darstellung der Informationen erfolgen oder auch eine Erinnerung ausgegeben werden, falls ein Füllstand oder eine Masse der Gasflasche eine zuvor definierte Grenze, insbesondere eine durch einen Nutzer definierbare Grenze, unterschreitet. Auf diese Weise ist eine rechtzeitige Neubestellung durch den Nutzer oder automatisiert möglich.

Typische Ausführungsformen ermöglichen die mehrfache Herstellung von Sprudelgetränken mit gleichbleibendem Sprudelgrad bei unterschiedlichem Füllgrad der mit Kohlendioxid gefüllten Gasflasche.

### Kurze Beschreibung der Zeichnungen

Nachfolgend wird die vorliegende Erfindung anhand der beiliegenden Zeichnungen näher erläutert, wobei die Figuren wie folgend beschrieben werden:
- Fig. 1: zeigt eine schematische Darstellung einer Sprudelvorrichtung gemäß einer beispielhaften Ausführungsform; und
- Fig. 2: zeigt einen Ausschnitt einer schematischen Schnittzeichnung einer Ausnahme einer Sprudelvorrichtung gemäß einer beispielhaften Ausführungsform.

### Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

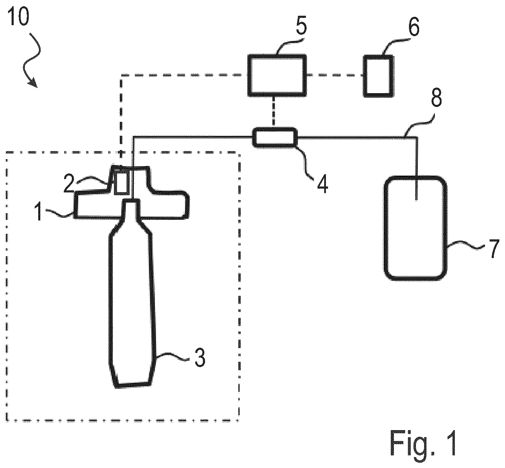

Fig. 1 zeigt ein Ausführungsbeispiel einer Sprudelvorrichtung 10 gemäß einer beispielhaften Ausführungsform. Eine Gasflasche 3 ist in einer Aufnahme 1 aufgenommen. Die Gasflasche 3 hängt frei in einem Gasflaschenraum 9, welcher beispielsweise ein Unterschrank einer Küchenzeile oder ein eigenes Gehäuse der Sprudelvorrichtung sein kann.

Mit einem mit der Aufnahme 1 verbundenen Kraftaufnehmer 2 ermittelt eine Steuerungseinrichtung 5 eine Masse der Gasflasche 3. Eine Verbindung zwischen dem Kraftaufnehmer kann beispielsweise drahtlos oder über ein elektrisch leitfähiges Medium hergestellt sein.

Über ein Bedienelement 6 wird ein von einem Benutzer eingestellter Sprudelgrad an die Steuerungseinrichtung 5 übermittelt, wobei die Übermittlung drahtlos oder über ein elektrisch leitfähiges Medium erfolgen kann. Bei weiteren Ausführungsformen umfasst die Sprudelvorrichtung eine digitale Schnittstelle beispielsweise zum Empfang eines Sprudelgrads oder die Steuerungseinrichtung umfasst einen Speicher, in welchem ein Sprudelgrad für einen über einen Sensor empfangbaren Code hinterlegt ist. Der Sensor kann beispielsweise ein Nahfeld-Kommunikationssensor, wie beispielsweise ein RFID-Sensor, oder ein optischer Sensor beispielsweise zur Aufnahme von QR-Codes sein.

Die Steuerung 5 ermittelt aus der Masse der Gasflasche, welche mit Hilfe des Kraftaufnehmers 2 erfasst wurde, und dem Sprudelgrad eine vorgegebene Zeitdauer, die das Ventil 4 zu öffnen ist, so dass bei Zuführung von Gas aus der Gasflasche 3 der Sprudelgrad in einer Flüssigkeit in einem Behälter 7 erreicht wird. Dabei berücksichtigt die Steuerungseinrichtung 5 auch ein Behältervolumen des Behälters 7, ein Füllungsgrad des Behälters 7 mit Flüssigkeit, beispielsweise Wasser, oder ein Flüssigkeitsvolumen einer in dem Behälter 7 aufgenommenen Flüssigkeit.

Nach Ermittlung der Zeitdauer steuert die Steuerungseinrichtung 5 das Ventil für die Zeitdauer an, so dass das geöffnete Ventil Gas aus der Gasflasche 3 über eine Druckleitung 8 in den Behälter strömen lässt. Auf diese Weise wird die Flüssigkeit in dem Behälter 7, beispielsweise Wasser, über die Druckleitung 8 begast.

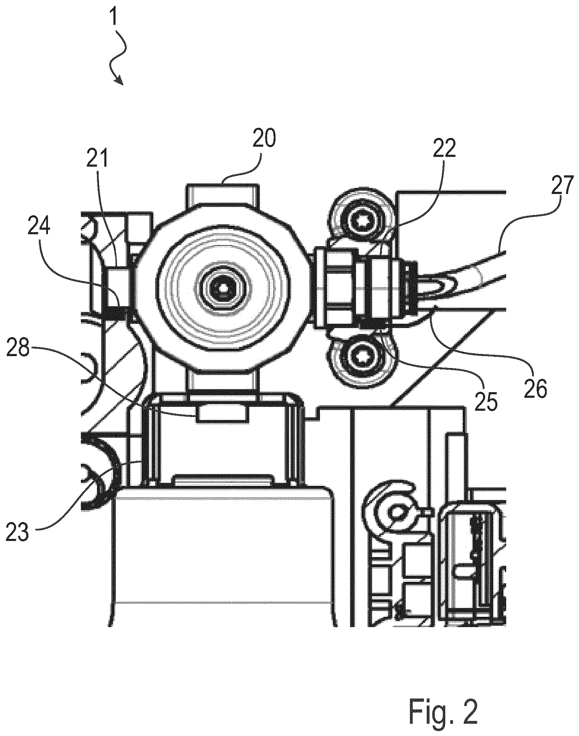

In der Figur 2 sind in einer schematischen, teilweise dargestellten Schnittansicht Elemente einer typischen Aufnahme von Ausführungsformen gezeigt. In einer Halterung 20 kann eine Gasflasche (in Fig. 2 nicht dargestellt) gehalten werden. Die Halterung 20 weist hierzu in einem Bereich 23 der Halterung 20 ein Gewinde auf, in welches das obere Endstück einer Gasflasche einschraubbar ist. Am oberen Ende des Bereichs 23 der Halterung 20 ist ein Gasanschluss 28 vorgesehen, welcher Gas aus einer in das Gewinde eingeschraubten Gasflasche aufnehmen kann. Die Gasflasche kann von unten in das Gewinde eingeschraubt werden, so dass sichergestellt ist, dass nur die gasförmige Phase austritt und nicht die flüssige Phase des CO₂.

Bei weiteren Ausführungsformen können auch Bajonett-Anschlüsse oder andere Befestigungen vorgesehen sein.

Um einen Austausch der Gasflasche in der Halterung 20 zu erleichtern, ist die Halterung 20 um eine Drehachse schwenkbar. Hierzu ist die Halterung mit einem linken ersten Lagerzapfen 21 und einem rechten zweiten Lagerzapfen 22 in entsprechenden Ausnehmungen eines Gehäuseteils oder in einem dafür vorgesehenen Lagerteil gelagert. Die Lagerzapfen 21 und 22 ermöglichen ein Verschwenken der Gasflasche nach vorne zur Erleichterung des Austausches der Gasflasche.

In den zweiten Lagerzapfen 22 ist eine Durchführung für über den Gasanschluss 28 aufgenommenes Gas aus einer in der Halterung 20 aufgenommenen Gasflasche integriert. Das Gas wird durch eine Leitung 27 weiter zu einem Ventil (Bezugszeichen 4 in der Fig. 1) geleitet.

In einem stillstehenden Bereich unter den Lagerzapfen in jeweiligen Ausnehmungen des Gehäuseteils oder des Lagerteils der Halterung sind jeweils eine erste Wägezelle 24 rechts und eine zweite Wägezelle 25 links angeordnet. Zu der zweiten Wägezelle ist auch ein elektrischer Anschluss 26 in der Fig. 2 gezeigt. Der elektrische Anschluss der ersten Wägezelle 24 ist in der Schnittansicht der Fig. 2 verdeckt. Durch die Anordnung der Wägezellen 24 und 25 in feststehenden Bereichen wird eine Bewegung der elektrischen Anschlüsse 26 der Wägezellen 24 und 25 vermieden.

Die Lagerzapfen 21 und 22 drücken jeweils immer auf die entsprechende Wägezelle 24 und 25. Somit messen die Wägezellen 24 und 25 bei nicht eingesetzter Gasflasche das Gewicht der Halterung 20 und bei eingesetzter Gasflasche das Gewicht der Halterung 20, der Gasflasche (leer) und des CO₂ in der Gasflasche.

Bei typischen Ausführungsformen ist das jeweilige Gewicht der Gasflasche für bestimmte Größen der Gasflasche jeweils eindeutig definiert und beispielsweise in einer Look-up-Tabelle hinterlegt. Über die Halterung, beispielsweise mit bestimmten Gewinden, oder durch eine RFID-Kommunikation kann bei Ausführungsformen sichergestellt werden, dass nur eindeutig definierte Gasflaschen beispielsweise mit bestimmten definierten Anschlüssen verwendet werden können. Hierdurch kann sichergestellt werden, dass das Gewicht der Gasflasche der Steuerungsvorrichtung auch bekannt ist. Zusätzlich oder alternativ kann die Sicherheit über eine optionale RFID-Kommunikation zwischen einem RFID-Chip der Gasflasche und der Steuerungseinrichtung gegeben sein.

Die Erfindung ist nicht auf zuvor beschriebenen Ausführungsformen beschränkt, vielmehr wird der Umfang der Erfindung durch die beigefügten Ansprüche bestimmt.

### Bezugszeichenliste

- 1: Aufnahme
- 2: Kraftaufnehmer
- 3: Gasflasche
- 4: Ventil
- 5: Steuerungseinrichtung
- 6: Bedienelement
- 7: Behälter
- 8: Druckleitung
- 9: Gasflaschenraum
- 10: Sprudelvorrichtung
- 20: Halterung
- 21: erster Lagerzapfen
- 22: zweiter Lagerzapfen
- 23: Bereich zur Aufnahme der Gasflasche
- 24: Erste Wägezelle
- 25: Zweite Wägezelle
- 26: Elektrischer Anschluss
- 27: Leitung
- 28: Gasanschluss

## Patentansprüche

1. Sprudelvorrichtung (10), insbesondere zum Begasen von Flüssigkeit mit Kohlendioxid, umfassend:
- einen Gasauslass, welcher eingerichtet ist, um in einen mit Flüssigkeit befüllbaren Behälter (7) eingeführt zu werden,
- einen mit dem Gasauslass über ein steuerbares Ventil (4) in Fluidverbindung stehendem Gasanschluss,
- einer zur Steuerung des Ventils (4) eingerichteten Steuerungseinrichtung (5),
- eine Aufnahme (1) mit einer Gewichtsermittlungseinrichtung zur Ermittlung eines
Gewichts einer in die Aufnahme (1) aufnehmbare und an den Gasanschluss anschließbare Gasflasche (3),
und **dadurch gekennzeichnet, dass**
die Steuerungseinrichtung (5) das Ventil (4) in Abhängigkeit des ermittelten Gewichts der Gasflasche (3) betätigt.

2. Sprudelvorrichtung (10) nach Anspruch 1, wobei die Steuerungseinrichtung (5) das Ventil (4) in Abhängigkeit eines von einem Benutzer einstellbaren Sprudelgrads betätigt.

3. Sprudelvorrichtung (10) nach einem der vorhergehenden Ansprüche, wobei die Steuerungseinrichtung (5) dazu eingerichtet ist, ein Behältervolumen eines an den Gasauslass angeschlossenen Behälters zu erfassen und das Ventil (4) in Abhängigkeit des erfassten Behältervolumens zu betätigen.

4. Sprudelvorrichtung (10) nach Anspruch 3, wobei das Behältervolumen des Behälters und/oder das Flüssigkeitsvolumens einer Flüssigkeit im Behälter (7) durch Eingabe an einem Bedienelement (6) der Steuerungseinrichtung (5) für die Steuerungseinrichtung (5) erfassbar ist.

5. Sprudelvorrichtung (10) nach Anspruch 3 oder 4, wobei die Steuerungseinrichtung (5) einen Sensor zum Erfassen des Behältervolumens des Behälters und/oder des Flüssigkeitsvolumens einer Flüssigkeit im Behälter (7) umfasst.

6. Sprudelvorrichtung (10) nach Anspruch 4 oder 5, wobei die Steuerungseinrichtung (5) dazu eingerichtet ist, einen in Abhängigkeit des Gewichts der Gasflasche ermittelten Füllstandswert für den Füllstand der Gasflasche anzugeben.

7. Sprudelvorrichtung (10) nach einem der vorhergehenden Ansprüche, wobei die Steuerungseinrichtung (5) die Öffnungszeit des Ventils (4) in Abhängigkeit eines Parameters variiert.

8. Sprudelvorrichtung (10) nach einem der vorhergehenden Ansprüche, wobei die Sprudelvorrichtung (10) integral mit einem konditionierbaren Wassersystem ausgeführt ist.

9. Sprudelvorrichtung (10) nach einem der vorhergehenden Ansprüche, wobei die Aufnahme (1) eine Halterung (20) umfasst, die mittels zweier Lagerzapfen (21, 22) um eine Drehachse schwenkbar ist, wobei zwei Wägezellen (24, 25) jeweils unter den Lagerzapfen (21, 22) als Teil der Gewichtsermittlungseinrichtung vorgesehen sind.

10. Verfahren zum Begasen von Flüssigkeit unter Verwendung einer Sprudelvorrichtung (10) nach einem der vorhergehenden Ansprüche, umfassend:
- Einführen des Gasauslasses in einen zumindest teilweise mit einer Flüssigkeit befüllten Behälter (7);
- Ermittlung eines Gewichts einer in die Aufnahme (1) aufgenommenen und an den Gasanschluss angeschlossenen Gasflasche (3);
**gekennzeichnet durch**
- Betätigen des Ventils (4), welches in einer Fluidverbindung von dem Gasanschluss zu dem Gasauslass angeordnet ist, in Abhängigkeit des ermittelten Gewichts der Gasflasche (3) durch die Steuerungseinrichtung (5).

11. Verfahren nach Anspruch 10, umfassend:
- Empfangen einer Eingabe eines Sprudelgrads; und
- Betätigen des Ventils (4) auch in Abhängigkeit des von dem Benutzer eingestellten Sprudelgrads.

12. Verfahren nach einem der Ansprüche 10 oder 11, umfassend:
- Erfassen eines Behältervolumens eines an den Gasauslass angeschlossenen Behälters; und
- Betätigen des Ventils (4) auch in Abhängigkeit des erfassten Behältervolumens.

13. Verfahren nach einem der Ansprüche 10 bis 12, umfassend:
- Erfassen eines Flüssigkeitsvolumens einer in dem Behälter (7) befindlichen Flüssigkeit; und
- Betätigen des Ventils (4) auch in Abhängigkeit des erfassten Flüssigkeitsvolumens.

14. Verfahren nach einem der Ansprüche 10 bis 13, umfassend Ermitteln eines Füllstandswerts in Abhängigkeit des Gewichts der Gasflasche (3) und Ausgeben des Füllstandswerts.

## Claims

1. Carbonation device (10), in particular for gassing liquid with carbon dioxide, comprising:
- a gas outlet which is configured to be inserted into a container (7) fillable with liquid,
- a gas connection in fluid communication with the gas outlet via a controllable valve (4),
- a control device (5) configured for controlling the valve (4),
- a receptacle (1) with a weight determination device for determining a weight of a gas cylinder (3) receivable in the receptacle (1) and connectable to the gas connection, and
**characterized in that**
the control device (5) actuates the valve (4) depending on the determined weight of the gas cylinder (3).

2. Carbonation device (10) according to claim 1, wherein the control device (5) actuates the valve (4) depending on a carbonation level adjustable by a user.

3. Carbonation device (10) according to any one of the preceding claims, wherein the control device (5) is configured to detect a container volume of a container connected to the gas outlet and to actuate the valve (4) depending on the detected container volume.

4. Carbonation device (10) according to claim 3, wherein the container volume of the container and/or the liquid volume of a liquid in the container (7) is detectable for the control device (5) by input at an operating element (6) of the control device (5).

5. Carbonation device (10) according to claim 3 or 4, wherein the control device (5) comprises a sensor for detecting the container volume of the container and/or the liquid volume of a liquid in the container (7).

6. Carbonation device (10) according to claim 4 or 5, wherein the control device (5) is configured to indicate a fill level value for the fill level of the gas cylinder determined depending on the weight of the gas cylinder.

7. Carbonation device (10) according to any one of the preceding claims, wherein the control device (5) varies the opening time of the valve (4) depending on a parameter.

8. Carbonation device (10) according to any one of the preceding claims, wherein the carbonation device (10) is designed integrally with a conditionable water system.

9. Carbonation device (10) according to any one of the preceding claims, wherein the receptacle (1) comprises a bracket (20) which is pivotable about an axis of rotation by means of two bearing journals (21, 22), wherein two load cells (24, 25) are provided respectively under the bearing journals (21, 22) as part of the weight determination device.

10. Method for gassing liquid using a carbonation device (10) according to any one of the preceding claims, comprising:
- inserting the gas outlet into a container (7) at least partially filled with a liquid;
- determining a weight of a gas cylinder (3) received in the receptacle (1) and connected to the gas connection; **characterized by**
- actuating the valve (4), which is arranged in a fluid communication from the gas connection to the gas outlet, depending on the determined weight of the gas cylinder (3) by the control device (5).

11. Method according to claim 10, comprising:
- receiving an input of a carbonation level; and
- actuating the valve (4) also depending on the carbonation level set by the user.

12. Method according to any one of claims 10 or 11, comprising:
- detecting a container volume of a container connected to the gas outlet; and
- actuating the valve (4) also depending on the detected container volume.

13. Method according to any one of claims 10 to 12, comprising:
- detecting a liquid volume of a liquid located in the container (7); and
- actuating the valve (4) also depending on the detected liquid volume.

14. Method according to any one of claims 10 to 13, comprising determining a fill level value depending on the weight of the gas cylinder (3) and outputting the fill level value.

## Revendications

1. Dispositif de gazéification (10), notamment destiné à gazéifier un liquide avec du dioxyde de carbone, comprenant :
- une sortie de gaz agencée pour être introduite dans un récipient (7) apte à être rempli de liquide,
- un raccord de gaz en communication fluidique avec la sortie de gaz par l'intermédiaire d'une vanne commandable (4),
- un dispositif de commande (5) agencé pour commander la vanne (4),
- un logement (1) muni d'un dispositif de détermination de poids destiné à déterminer le poids d'une bouteille de gaz (3) apte à être logée dans le logement (1) et à être raccordée au raccord de gaz,
**caractérisé en ce que**
le dispositif de commande (5) actionne la vanne (4) en fonction du poids déterminé de la bouteille de gaz (3).

2. Dispositif de gazéification (10) selon la revendication 1,
dans lequel le dispositif de commande (5) actionne la vanne (4) en fonction d'un degré de gazéification réglable par un utilisateur.

3. Dispositif de gazéification (10) selon l'une des revendications précédentes,
dans lequel le dispositif de commande (5) est agencé pour détecter le volume d'un récipient raccordé à la sortie de gaz et pour actionner la vanne (4) en fonction du volume détecté du récipient.

4. Dispositif de gazéification (10) selon la revendication 3,
dans lequel le volume du récipient et/ou le volume d'un liquide contenu dans le récipient (7) peut être détecté pour le dispositif de commande (5) grâce à une saisie effectuée sur un élément d'actionnement (6) dudit dispositif de commande (5).

5. Dispositif de gazéification (10) selon la revendication 3 ou 4,
dans lequel le dispositif de commande (5) comprend un capteur destiné à détecter le volume du récipient et/ou le volume d'un liquide contenu dans le récipient (7).

6. Dispositif de gazéification (10) selon la revendication 4 ou 5,
dans lequel le dispositif de commande (5) est agencé pour indiquer une valeur de niveau de remplissage de la bouteille de gaz, déterminée en fonction du poids de la bouteille de gaz.

7. Dispositif de gazéification (10) selon l'une des revendications précédentes,
dans lequel le dispositif de commande (5) fait varier la durée d'ouverture de la vanne (4) en fonction d'un paramètre.

8. Dispositif de gazéification (10) selon l'une des revendications précédentes,
dans lequel le dispositif de gazéification (10) est réalisé intégralement avec un système d'eau à conditionner.

9. Dispositif de gazéification (10) selon l'une des revendications précédentes,
dans lequel le logement (1) comprend un support (20) qui peut pivoter autour d'un axe de rotation au moyen de deux tourillons (21, 22), deux cellules de pesage (24, 25) étant prévues respectivement sous les tourillons (21, 22) en faisant partie du dispositif de détermination de poids.

10. Procédé de gazéification d'un liquide à l'aide d'un dispositif de gazéification (10) selon l'une des revendications précédentes, comprenant :
- l'introduction de la sortie de gaz dans un récipient (7) au moins partiellement rempli d'un liquide ;
- la détermination du poids d'une bouteille de gaz (3) logée dans le logement (1) et raccordée au raccord de gaz ;
**caractérisé par**
- l'actionnement, par le dispositif de commande (5), de la vanne (4) disposée en communication fluidique entre le raccord de gaz et la sortie de gaz, en fonction du poids déterminé de la bouteille de gaz (3).

11. Procédé selon la revendication 10, comprenant :
- la réception d'une saisie indiquant un degré de gazéification ; et
- l'actionnement de la vanne (4) également en fonction du degré de gazéification réglé par l'utilisateur.

12. Procédé selon l'une des revendications 10 ou 11, comprenant :
- la détection du volume d'un récipient raccordé à la sortie de gaz ; et
- l'actionnement de la vanne (4) également en fonction du volume détecté du récipient.

13. Procédé selon l'une des revendications 10 à 12, comprenant :
- la détection du volume d'un liquide se trouvant dans le récipient (7) ; et
- l'actionnement de la vanne (4) également en fonction du volume de liquide détecté.

14. Procédé selon l'une des revendications 10 à 13, comprenant la détermination d'une valeur de niveau de remplissage en fonction du poids de la bouteille de gaz (3) et la transmission de la valeur de niveau de remplissage.
